**Europäisches Patentamt**

**European Patent Office**

**Office européen des brevets**

(11) Publication number : **0 488 971 A2**

## (12) EUROPEAN PATENT APPLICATION

(21) Application number : **91830523.6**

(22) Date of filing : **29.11.91**

(51) Int. Cl.⁵ : **A61C 17/26**

(30) Priority : **30.11.90 IT 953890**

(43) Date of publication of application :
**03.06.92 Bulletin 92/23**

(84) Designated Contracting States :
**DE ES FR GB**

(71) Applicant : **Giunti, Renzo**
**Via delle Panche n.147/1**
**I-50141 Firenze (IT)**

(72) Inventor : **Giunti, Renzo**
**Via delle Panche n.147/1**
**I-50141 Firenze (IT)**

(74) Representative : **Mannucci, Gianfranco,**
**Dott.-Ing. et al**
**Ufficio Tecnico Ing. A. Mannucci Via della**
**Scala 4**
**I-50123 Firenze (IT)**

(54) **Toothbrush with rotating brushes.**

(57) An electric toothbrush comprises rotating brush means and an electric drive motor ; the brush means comprise two contrarotating brushes arranged adjacent to each other to act on the same flank of the dental arch, so that that brush which is acting in proximity to the gum always rotates in the correct direction.

Fig . 2

EP 0 488 971 A2

The invention relates to an electric toothbrush of the type comprising at least one rotating brush and an electric operating motor.

Various kinds of electric toothbrushes are known, comprising a reversible motor driving a shaft on which is mounted a rotating brush after the manner of a bottle-brush. Toothbrushes of this type are described, for example, in American patents 4,163,300 and 3,739,416. In these brushes of known type, reversing systems are provided to cause the brush to rotate first in one direction then in the other, depending on which area of the dental arch it is acting on. The reason for this is that in order to clean the teeth properly and avoid damaging the gums, said brush must always rotate in such a direction as to remove any particles away from the gum - which also has the purpose of avoiding injury to the gum from the bristles of the brush. Known toothbrushes -for example those of the two American patents cited above - have switch systems incorporated in that portion of the toothbrush which is introduced into the mouth and operated directly by contact of the toothbrush with the mouth, or (for example US Patent 4,163,300) gravity-sensitive reversing means which reverse the rotational motion of the motor when the position of the toothbrush is altered.

All versions known at present are quite complex in structure owing to the presence of a reversible electric motor and reversing means which, in addition to being somewhat expensive, are also liable to frequent failures and malfunctions, with consequent risk for the user who may injure himself if the reversing means fail to operate correctly and cause the rotating brush to rotate in the wrong direction.

The subject of the invention is a toothbrush of the type defined above without these disadvantages.

In particular, the subject of the invention is a toothbrush whose structure is simpler, cheaper and more reliable, and which is based on a different operating principle that does not require the rotational motion of the brush means to be reversed when the position of use of the toothbrush changes.

In essence, the electric toothbrush according to the invention comprises two contrarotating brushes arranged adjacent to each other to act on the same flank of the dental arch. The two brushes rotate in opposite directions about substantially parallel axes and lie side by side in such a way that during use they are used simultaneously on the same flank of the tooth. In this way, as the following description will make clear, it is not necessary to reverse the rotational motion of the motor and hence of the brushes when the position of the toothbrush with respect to the dental arch is changed, because the brush in contact with the base of the tooth (and hence with the gum) is always rotating in the correct direction.

Advantageously, the toothbrush may comprise a protective shield that covers one flank of the complex formed by the two brushes. The protective shield not only always shows which of the two flanks or sides of the complex of brushes must be held against the dental arch for proper operation, but also prevents contact between the rotating brushes and the internal mucosae of the mouth. In essence, the shield is positioned to the side of a plane containing two axes of rotation of the brushes and may be suitably concave toward the inside, that is toward the brush side.

In one possible embodiment, the toothbrush has two brushes mounted on contrarotating shafts, one of which may be driven directly by an electric motor, optionally interposing a suitable reduction gear, while the other is mechanically coupled to the first, for example by a pair of toothed wheels, and is drawn round in synchrony with said first shaft.

In a modified embodiment, the toothbrush has a single flexible shaft on which the two brushes are mounted. In this case the shaft forms a 360° bend and then has an end portion extending substantially parallel to an intermediate portion. The two contrarotating brushes are formed on said two portions.

To limit the dimensions of the complex of brushes, and hence make the cleaning action easier, provision may advantageously be made for the bristles of the two contrarotating brushes partially to interpenetrate. For this purpose, in order to avoid interference between the bristles of one brush and the bristles of the other, each brush may be made of a plurality of discoidally shaped clusters of bristles set-apart from each other; the clusters of bristles of one brush are staggered with respect to the clusters of bristles of the opposing brush and the gap between the axes of said brushes is made less than the sum of the radial extent of said bristles. This gives an alternating arrangement of the bristle clusters and an efficient cleaning action as well as a reduced volume of the complex of brushes.

Advantageously, the complex of brushes may be carried by an interchangeable portion of the toothbrush, for example fitting on with spring release means, so that the body of the toothbrush - containing the electric motor and optionally a rechargeable battery - may be used by several persons by simply replacing the front portion intended to enter the user's oral cavity.

The invention will be understood more clearly by following the description and accompanying drawing, which latter shows a practical, non-limiting illustrative embodiment of said invention. In the drawing:

Fig. 1 shows a side view of the toothbrush;

Fig. 2 shows a partial cross-section of the toothbrush taken through II-II of Fig. 1;

Fig. 3 shows a local cross-section taken through III-III of Fig. 2;

Fig. 4 shows a partial cross-section of a modified embodiment; and

Fig. 5 shows a diagram of operation, where it may be seen how the toothbrush acts on the dental arches in the various positions.

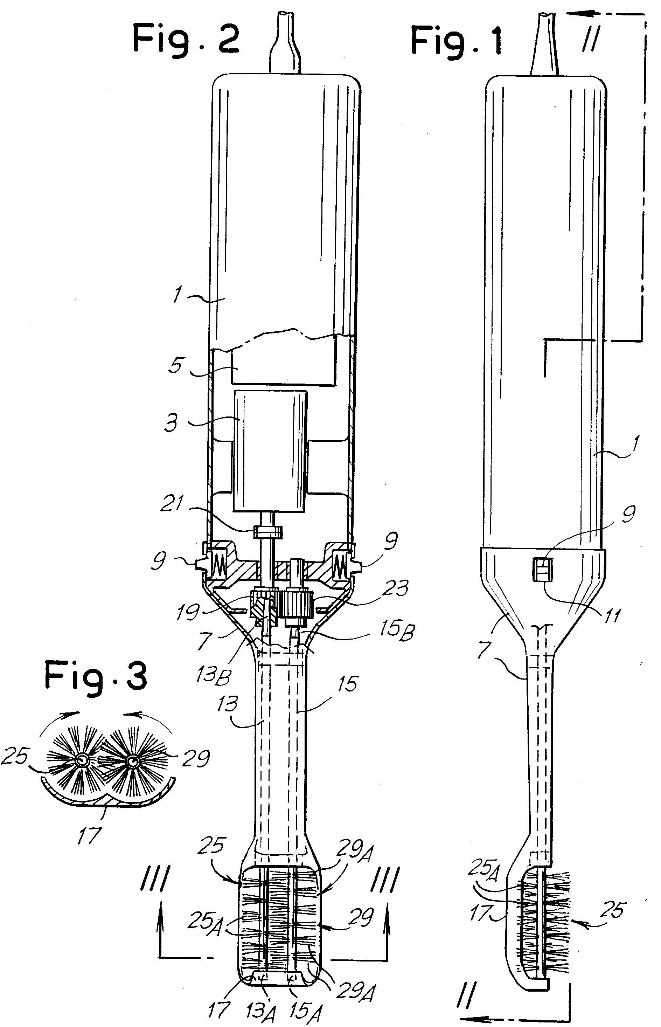

Referring initially to Figs 1 through 3, the toothbrush according to the invention has a body 1 in which is housed an electric motor, diagrammatically indicated by 3, and an optional rechargeable battery 5 to power the motor 3. The body 1 is removeably connected to a front portion 7 which fits by means of elastic lugs 9 and holes 11 in the body of the toothbrush. Two shafts 13 and 15 extend down through the portion 7 and are supported at ends 13A and 15A respectively in seats formed in a protective shield 17 which forms part of the portion 7 of the toothbrush. Keyed to the other end of the shaft 13, indicated by 13B, is a toothed wheel 19 which takes up the motion from the drive shaft 21 connected to the electric motor 3. Keyed to the corresponding end 15B of the shaft 15 is a second toothed wheel 23 engaging with the toothed wheel 19, so that the shaft 15 is rotated by the electric motor 3 indirectly by means of the couple of toothed wheels 19, 23 which form a mechanical transmission. Advantageously, the two toothed wheels 19 and 23 are identical, so as to keep the two shafts 13 and 15 turning at the same speed. At a point corresponding to the protective shield 17 formed by the toothbrush portion 7, the two shafts 13 and 15 carry two brushes, after the manner of bottlebrushes 25 and 29, rotating in opposite directions. Each of the two brushes is made of a complex of bristles arranged in discoidal clusters 25A and 29A, respectively. These disks of bristles are set apart from each other and axially staggered, in such a way that the bristle clusters 29A of the brush 29 enter the spaces between adjacent bristle clusters 25A. This arrangement gives a comparatively thick clustering of bristles and at the same time an arrangement of the shafts 13 and 15 such as to reduce to a minimum the volume of the complex of brushes 25, 29 that is to be introduced into the oral cavity.

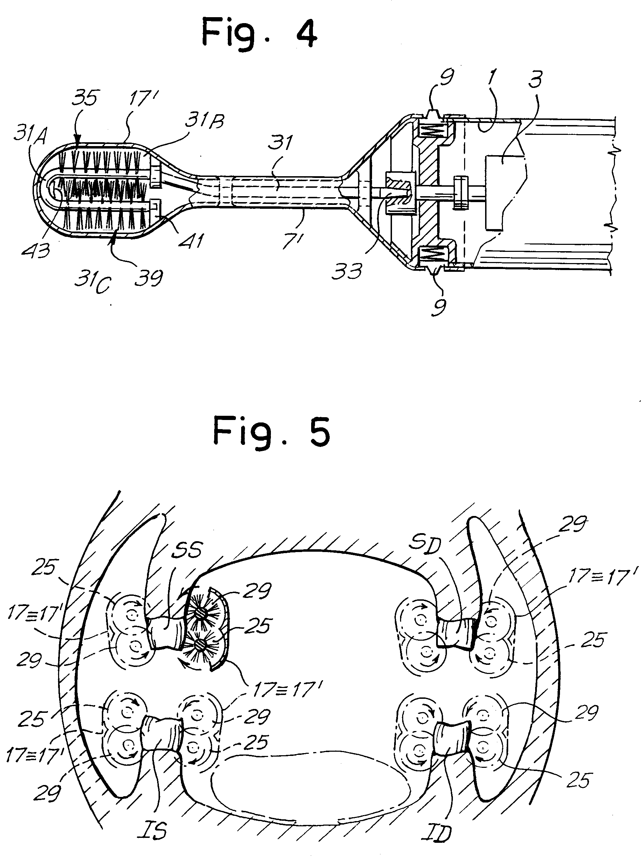

Fig. 4 shows in partial cross-section a modified embodiment provided with a single flexible shaft 31 connected at one end to a coupling 33 by means of which it takes up the motion of the electric motor indicated again by 3 and housed in the toothbrush body 1. The front portion, indicated by 7' in this example, forms at the front a protective shield 17' (corresponding to the protective shield 17 of the illustrative embodiment of Figs 1 and 2), which houses the end portion of the flexible shaft 31. Said end portion forms a 360° bend 31A such that the shaft 31 forms two sections 31B and 31C substantially parallel to each other, on which are mounted the bristles that form two brushes, here indicated by 35 and 39 respectively. The brushes 35 and 39 may be formed with the same kind of arrangement of the bristles as that of the brushes 25 and 29. The distal end of the flexible shaft 31 is supported by a suitable support 41, while the bend 31A is supported by a support 43.

Fig. 5 shows diagrammatically the manner of operation of the toothbrush according to the invention. Shown diagrammatically in this figure is a cross-section of the oral cavity in which are indicated the upper and lower dental arches respectively. More particularly, SS indicates the left portion of the upper dental arch, SD the right portion of said upper arch, IS the left portion of the lower arch and ID the right portion of the lower arch. In operation, the electric motor 3 is kept rotating constantly in the same direction, so that one of the two brushes 25, 29 or 35, 39 is constantly rotating clockwise while the other is constantly rotating counterclockwise. The arrangement of the brushes and of the protective shield 17, respectively 17', is such that the brushes are always held against the dental arch in such a way that that brush which comes into contact with the tooth portion adjacent to the gum and with the gum itself is rotating in a direction that will remove any particles away from the gum towards the tip of the tooth. This is clearly shown in the diagrammatic representation of the eight positions which may be assumed by the end portion of the toothbrush. For example, when the toothbrush is being used to clean the external flank of the left portion of the upper arch, the clockwise-rotating brush 25 touches the gum and the base of the tooth and thus removes particles of soiling from the gum without damaging the gum itself. On the other hand the brush 29, rotating counterclockwise, is away from the gum and from the base of the tooth and so its direction of rotation does not obstruct the cleaning action or damage the gum. The combined action of the two brushes expels particles and moves the toothpaste froth around properly. When the toothbrush is moved down to clean the external flank of the left portion of the lower arch, the brush 29 makes contact with the base of the tooth and with the lower gum and turns in the correct direction to clean effectively and avoid any damage to the gum mucosa. The brush 25, rotating clockwise, once again does not damage the gum or obstruct the cleaning effect. When the toothbrush is moved toward the inside to clean the internal flanks of the upper and lower arches respectively, the brushes 25 and 29 again rotate in the correct direction. There is an analogous effect on the right-hand side of the arches.

In summary, the arrangement of brushes according to the invention produce, a correct cleaning action and avoids any damage to the gum mucosa with no need to reverse the direction of rotation of the brush means, and hence without the use of poorly reliable means, and with extreme constructional simplicity of the toothbrush.

It will be understood that the drawing shows only an illustrative embodiment which is given purely as a practical demonstration of the invention, it being possible for said invention to vary as regards shapes and arrangements without however departing from the scope of the concept underlying said invention.

## Claims

1. An electric toothbrush comprising rotating brush means and an electric drive motor, in which said brush means comprise two contrarotating brushes arranged adjacent to each other to act on the same flank of the dental arch.

2. The toothbrush as claimed in claim 1, comprising a single protective shield that covers one flank of the complex formed by the two brushes.

3. The toothbrush as claimed in claim 2, in which said shield is positioned to the side of a plane containing the two axes of rotation of the brushes.

4. The toothbrush as claimed in one or more of the proceeding claims, in which said brushes are mounted on two contrarotating shafts.

5. The toothbrush as claimed in claim 4, in which one of said two shafts is rotated by said motor, and the other of said shafts is coupled to the first by transmission means and is drawn round.

6. The toothbrush as claimed in one or more of claims 1 through 3, in which said brushes are mounted on a single flexible shaft bent into two portions substantially parallel to each other.

7. The toothbrush as claimed in one or more of the proceeding claims, in which the bristles of said two brushes partially interpenetrate.

8. The toothbrush as claimed in one or more of the proceeding claims, in which each of said brushes is made of a plurality of discoidally shaped clusters of bristles, set apart from each other, the clusters of bristles of one brush being staggered with respect to the clusters of bristles of the opposing brush, and the gap between the axes of said brushes being less than the sum of the radial extent of said bristles.

9. The toothbrush as claimed in one or more of the proceeding claims, characterized in that said brushes are carried on an interchangeable end portion of the toothbrush.

Fig. 2

Fig. 1

Fig. 3

# Fig. 4

# Fig. 5